# FASCICULE DE BREVET EUROPEEN

(11) **EP 1 251 620 B1**
(45) Date de publication et mention de la délivrance du brevet: **10.10.2012**
(21) Numéro de dépôt: 02290952.7
(22) Date de dépôt: 16.04.2002
(51) Int. Cl.: H02K 1/14, H02K 1/18, H02K 11/00

(54) **Machine tournante électrique comportant un stator formé de secteurs assemblés**
Drehende Maschine mit einem aus Abschnitten zusammengesetzter Rotor
Rotating machine with a stator comprising assembled sectors

(30) Priorité: 17.04.2001 FR 0105189
(43) Date de publication de la demande: 23.10.2002
(73) Titulaire: MOTEURS LEROY-SOMER, 16000 Angoulême (FR)
(72) Inventeur: Gauthier, Pascal, 16290 Asnières-sur-Nouère (FR); Coupart, Eric, 16000 Angoulême (FR); Saint-Michel, Jacques, 16000 Angoulême (FR); Gilles, Christophe, 16000 Angoulême (FR)
(74) Mandataire: Tanty, François

(56) Documents cités:
- EP-A- 0 872 943
- EP-A- 0 909 009
- DE-C- 700 420
- GB-A- 258 981
- US-A- 5 729 072
- US-A- 5 838 086
- PATENT ABSTRACTS OF JAPAN vol. 1995, no. 07, 31 août 1995 (1995-08-31) -& JP 07 107707 A (SHIBAURA ENG WORKS CO LTD), 21 avril 1995 (1995-04-21)

## Description

La présente invention concerne les machines tournantes électriques et plus particulièrement, mais non exclusivement, les stators de moteurs synchrones.

L'invention vise notamment à améliorer les performances électriques des machines comportant un stator bobiné sur dents. Dans un stator bobiné sur dents, chaque dent sert de noyau à un enroulement. De plus, le nombre de dents n_{dents} est de préférence fonction du nombre de paires de pôles nₚₐᵢᵣₑₛ et du nombre de phases nₚₕₐₛₑₛ suivant la formule n_{dents} = nₚₐᵢᵣₑₛ * nₚₕₐₛₑₛ.

Dans bon nombre de machines tournantes connues, le circuit magnétique du stator est formé par la superposition de tôles magnétiques de forme générale annulaire, réalisées chacune par découpage avec des dents définissant entres elles des encoches pour le passage des conducteurs électriques d'induit ou d'inducteur.

La demande EP-A-0 823 771 décrit un stator comportant un enroulement sur chaque dent. Le circuit magnétique du stator est formé par l'assemblage de secteurs définissant des entrefers à mi-largeur des encoches. Le découpage en secteurs fragilise le stator car les portées d'appui des secteurs les uns sur les autres sont relativement étroites. D'autre part, le flux magnétique traverse autant d'entrefers que de secteurs, diminuant le rendement de la machine.

Le brevet GB 258 981 décrit une machine dynamoélectrique dont le stator a un nombre de dents égal au nombre de pôles et qui est formé de secteurs assemblés définissant des entrefers coupant les dents à mi-largeur.

L'invention vise à réduire le coût de fabrication d'une machine électrique tournante sans dégrader le rendement d'une telle machine.

L'invention a pour objet une nouvelle machine électrique tournante telle que définie dans la revendication 1.

Grâce à l'invention, le flux magnétique qui circule d'une demi-dent à l'autre le long d'un même secteur ne rencontre pas d'entrefer, ce qui permet de ne pas générer de pertes magnétiques.

De plus, les secteurs peuvent être réalisés avec des éléments découpés pratiquement sans chute, avec des outils de taille relativement petite, donc capables de grandes cadences.

En outre, les portées d'appui sont de plus grande dimension que dans le cas où les entrefers se situent à mi-largeur des encoches, ce qui est notamment le cas de la machine décrite dans la demande EP-A-0 823 771. Cela permet d'améliorer le maintien des secteurs et rend possible d'assurer leur cohésion par simple insertion à force dans un carter cylindrique.

L'invention convient tout particulièrement aux machines dans lesquelles chaque dent sert de noyau à une bobine individuelle et notamment les moteurs synchrones à stator bobiné sur dents et à rotor à aimants permanents à concentration de flux. Dans de telles machines, le nombre de dents et de bobines est relativement faible, ce qui est favorable sur le plan du coût de fabrication.

Selon l'invention, les secteurs présentent chacun des reliefs aptes à coopérer avec des reliefs complémentaires de secteurs adjacents, ce qui facilite le montage des secteurs et améliore leur cohésion.

Dans une réalisation particulière de l'invention, le stator a six dents ou plus.

Dans une réalisation particulière, le circuit magnétique du stator est inséré à force dans un carter cylindrique qui induit sur les secteurs des forces de compression radiales assurant leur cohésion.

Lorsque le stator reçoit une bobine individuelle sur chaque dent, chaque dent présente de préférence une largeur non constante de manière à permettre un certain blocage de la bobine sur la dent. Un tel blocage est avantageux non seulement lors du montage des bobines sur le circuit magnétique du stator lors de la construction de la machine mais également lors du remplacement d'une bobine sans réimprégnation du stator. Chaque dent présente de préférence des côtés opposés qui divergent en éloignement du rotor, sur au moins une majeure partie de leur longueur à compter de leur extrémité libre, pour permettre le blocage précité. De plus, un autre avantage à avoir des dents dont la largeur croît à partir d'une certaine distance de leur extrémité libre en s'éloignant du rotor réside dans la diminution du risque de saturation des tôles magnétiques utilisées, en raison de la section plus grande offerte aux lignes de champ magnétique. Il est ainsi possible d'utiliser un matériau magnétique moins coûteux.

Dans une réalisation particulière, les dents sont dépourvues d'épanouissements polaires, de manière à permettre une mise en place facile des bobines individuelles.

Avantageusement, les dents comportent à proximité de leur extrémité libre des encoches pour le montage de cales de blocage des bobines engagées sur les dents.

Avantageusement, la longueur des dents est plus grande que la largeur de la culasse.

Les caractéristiques et avantages de la présente invention ressortiront à la lecture de la description détaillée qui va suivre, d'exemples de réalisation non limitatifs de l'invention, et à l'examen du dessin annexé, ce dernier faisant partie intégrante de la description, sur lequel :
- la figure 1 est une vue schématique en perspective d'un moteur synchrone conforme à un exemple de mise en oeuvre de l'invention,
- la figure 2 est une vue schématique de dessus selon la flèche II de la figure 1,
- la figure 3 représente isolément, en perspective et d'une manière schématique, le stator,
- la figure 4 représente isolément, en perpective, un secteur du circuit magnétique du stator, et
- la figure 5 illustre l'assemblage du secteur de la figure 4 avec un secteur identique.

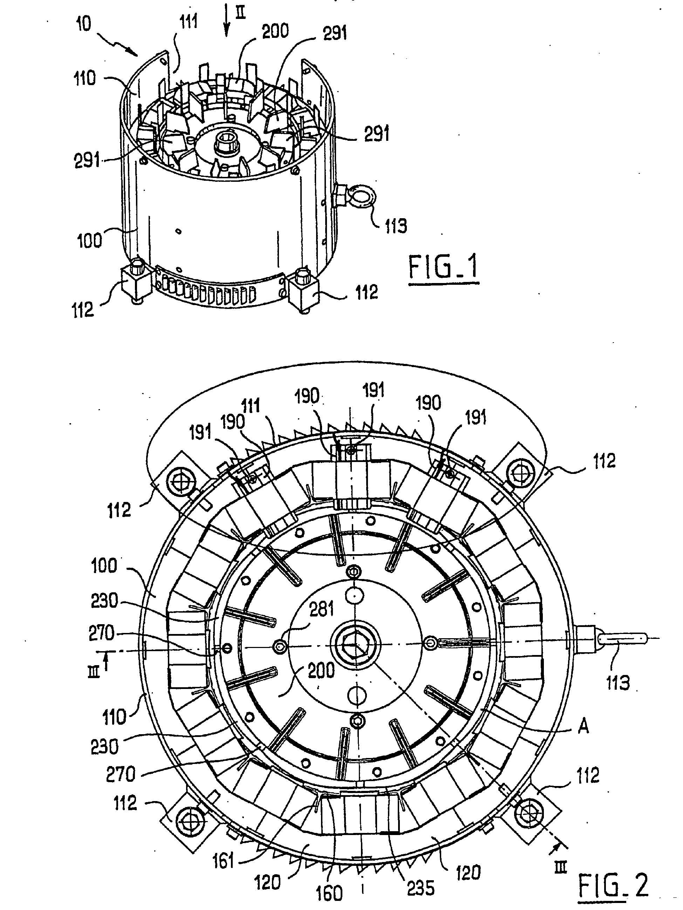

On a représenté aux figures 1 et 2 un moteur synchrone 10 conforme à l'invention, comportant un stator 100 et un rotor 200. Le moteur 10 est sans balais, à rotor à concentration de flux et à stator bobiné sur dents, et fonctionne en courant triphasé.

Le stator 100 comporte un carter 110 en acier, présentant une ouïe latérale 111 pour le passage notamment des conducteurs électriques d'alimentation des enroulements du stator. Le carter 110 est muni, extérieurement, de pattes de fixation 112 et d'un crochet de levage 113.

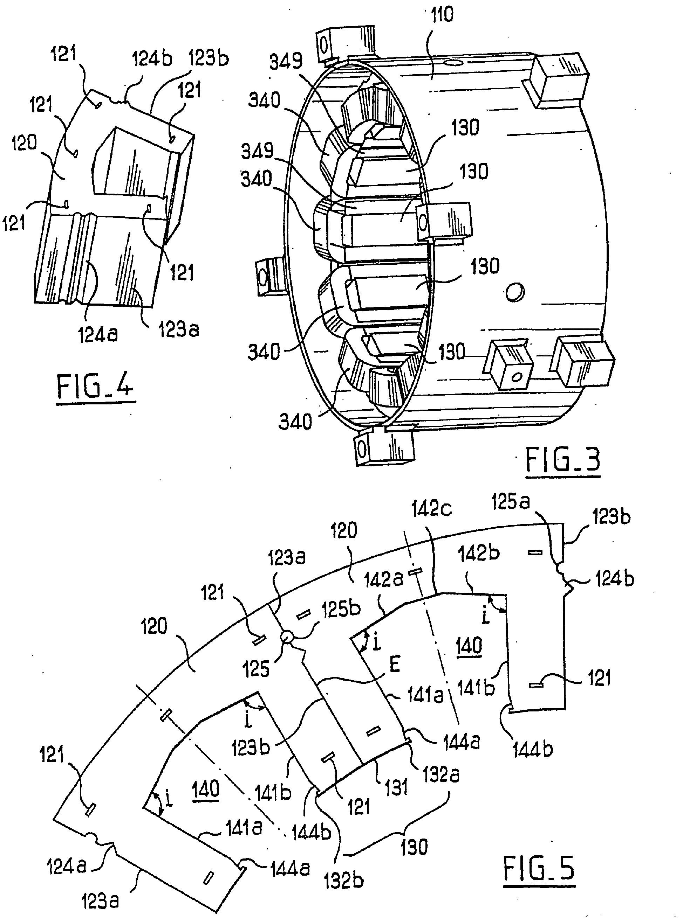

Le stator 100 comporte un circuit magnétique comprenant, dans l'exemple représenté, une pluralité de secteurs 120 identiques, dont l'un d'eux est représenté isolément en perpective à la figure 4.

Chaque secteur 120 est constitué par un paquet de tôles magnétiques identiques superposées et clipsées entre elles de manière à constituer un ensemble unitaire, le clipsage étant obtenu selon une technique connue en elle-même grâce à des déformations ponctuelles de chaque tôle en plusieurs points d'accrochage 121. L'utilisation d'un paquet de tôles magnétiques permet de limiter les pertes par courants induits. Deux secteurs 120 forment, lorsque assemblés, une dent 130 servant au montage d'une bobine individuelle 340, comme on peut le voir sur la figure 5 notamment. Le nombre de dent n_{dents} est dans l'exemple décrit égal à 12, le moteur étant destiné à être alimenté en courant triphasé et le rotor comportant 8 pôles. Bien entendu, le nombre de pôles du rotor pourrait être différent et notamment égal à 12 ou 16 par exemple. Le stator pourrait encore avoir un nombre de dents au stator qui ne soit pas lié au nombre de paires de pôles nₚₐᵢᵣₑₛ du rotor et au nombre de phases nₚₕₐₛₑₛ par la relation n_{dents} = nₚₐᵢᵣₑₛ * nₚₕₐₛₑₛ.

Chaque secteur 120 comporte sur ses côtés 123a et 123b destinés à coopérer avec les secteurs 120 adjacents des reliefs respectifs 124a et 124b. Ces reliefs 124a et 124b présentent des formes complémentaires, avec un profil généralement triangulaire en vue de dessus, l'un en creux l'autre en saillie, avec deux côtés sensiblement rectilignes reliés par un arrondi. La coopération des reliefs 124a et 124b contribue au bon positionnement des secteurs 120 entre eux lors de l'assemblage du circuit magnétique du stator. Chaque secteur 120 comporte également, sur ses côtés 123a et 123b, des gorges 125a et 125b respectives, chacune de section transversale demi-circulaire, situées dans le voisinage des reliefs 124a et 124b, et formant des trous 125 de section circulaire lorsque les secteurs 120 sont assemblés. Ces trous 125 servent au montage de trois détecteurs 190, comme cela sera précisé dans la suite.

On remarquera sur la figure 5 que l'entrefer E, à l'interface entre deux secteurs 120 adjacents, passe par le milieu de la dent 130 correspondante, ce qui permet de réduire les pertes magnétiques puisque le flux magnétique peut circuler sans rencontrer d'entrefer d'une demi-dent à la demi-dent adjacente d'un même secteur 120, lors du fonctionnement de la machine.

L'ensemble des secteurs 120 est inséré à force dans le carter cylindrique 110 et la cohésion du circuit magnétique formé par l'ensemble des secteurs 120 est assurée par les forces de compression radiales exercées par le carter 110 sur les secteurs 120.

Chaque secteur 120 définit une encoche 140 dont les côtés opposés 141a et 141b font chacun un angle i de plus de 90° avec les régions adjacentes 142a et 142b du fond de l'encoche 140, elles-mêmes perpendiculaires aux rayons passant par la ligne de raccordement de la dent concernée avec le fond de l'encoche. Dans l'exemple de réalisation décrit, l'angle i vaut 90,4°, cette valeur n'étant bien entendu qu'un exemple.

Les côtés 123a et 123b des secteurs sont généralement alignés chacun avec un rayon, hormis les reliefs 124a, 124b, 125a et 125b, et la largeur de chaque dent 130 croît sensiblement, hormis des découpes 144a ou 144b réalisées à proximité de son extrémité libre 131 tournée vers le rotor, au fur et à mesure que l'on s'éloigne du rotor.

On remarquera à l'examen de la figure 5 que chaque dent 130 ne comporte pas, dans le voisinage de son extrémité libre 131, d'épanouissements polaires, contrairement à un grand nombre de stators connus. L'extrémité libre 131 est une portion de cylindre de révolution, de même axe que l'axe de rotation du rotor, et concave vers le rotor.

Dans l'exemple représenté, les parties d'extrémité 132a et 132b de chaque dent 130, situées entre son extrémité libre 131 et les découpes 144a ou 144b, sont alignées avec les côtés 141a et 141b, respectivement.

Le fond de chaque encoche comporte une région médiane 142c reliant les régions 142a et 142b et perpendiculaire à un rayon coupant l'encoche 140 à mi-largeur, représenté en trait discontinu sur la figure 5.

Comme mentionné précédemment, chaque dent 130 reçoit une bobine individuelle 340, occupant dans chaque encoche 140 adjacente à la dent 130 considérée, sensiblement la moitié du volume de cette encoche.

Au fur et à mesure du montage des bobines 340 sur les dents 130, des cales de maintien 160 sont glissées dans les découpes 144a, 144b pour fermer les encoches 140. Ces cales 160 comportent, comme on peut le voir sur la figure 2, des cloisons 161 s'étendant entre les parties des deux bobines 340 logées dans l'encoche 140 concernée. Des feuilles d'un isolant 349 sont interposées entre les encoches 140 et les bobines 340.

La convergence des côtés 141a et 141b de la dent 130 vers le rotor et la forme correspondante de la section intérieure de la bobine contribue à son immobilisation sur la dent 130. La réparation peut se faire sur place, sans avoir à renvoyer la machine chez le fabricant, et sans avoir à procéder à une nouvelle imprégnation du stator, ce qui permet de raccourcir le temps de réparation. Le moteur 10 peut avantageusement être livré avec une ou plusieurs bobines 340 de remplacement.

Le rotor 200 est à concentration de flux et comporte des aimants 270 disposés entre des pièces polaires 230.

Une zone annulaire A est ménagée autour d'une joue fixée sur le rotor, permettant la lecture du champ magnétique des aimants 270 du rotor au moyen de détecteurs 190 que l'on peut voir sur la figure 2.

Les détecteurs 190 sont, dans l'exemple de réalisation décrit, au nombre de trois, le moteur étant triphasé, et comprennent chacun un capteur à effet Hall agencé pour détecter le champ magnétique au-dessus de la région périphérique A du rotor 200, autour d'une joue d'extrémité du rotor. La lecture du champ magnétique se fait selon un axe parallèle à l'axe de rotation du rotor, le capteur à effet Hall venant en recouvrement de la région périphérique A. Les détecteurs 190 sont montés, dans l'exemple illustré, sur trois dents consécutives 130 situées au voisinage de l'ouïe 111.

Chaque détecteur 190 est fixé par une vis 191 sur une dent 130 du stator, cette vis 191 étant engagée dans un trou 125. Chaque détecteur 190 s'étend suivant l'axe radial Zᵤ, Zᵥ ou Z_{w} de la dent associée et traverse la bobine 340 engagée sur cette dent. Les bobines 340 présentent à cet effet une section intérieure dont la longueur est suffisamment grande pour permettre le passage du détecteur 190. L'espace ménagé entre une bobine et la dent correspondante pour le passage du détecteur peut être de l'ordre de 5 mm, par exemple, un tel espace permettant d'isoler la bobine et la dent là où il n'y a pas d'isolant 349.

La lecture directe du champ magnétique des aimants permanents 270 est avantageuse parce qu'elle permet d'éviter d'avoir à rapporter sur le rotor des éléments spécifiques servant uniquement à la lecture de la position angulaire du rotor. La fabrication du rotor s'en trouve simplifiée et la fiabilité renforcée. De plus, le montage des détecteurs 190 dans l'espace compris entre les bobines 340 et les dents 130 s'avère particulièrement compact, tout en permettant un accès aisé aux détecteurs 190 afin de les remplacer, si nécessaire.

Chaque détecteur 190 est positionné à l'intérieur d'une bobine 340 de phase donnée (u, v et w). Chaque détecteur 190 permet de détecter quelle polarité du rotor se situe en face de la bobine associée (et donc de la phase concernée) à un instant donné. Chaque détecteur 190 délivre un signal bas ou haut selon la polarité détectée. Chaque détecteur 190 comporte un circuit électronique de mise en forme des signaux délivrés par le capteur à effet Hall, afin de réduire la sensibilité aux parasites. Selon la position du rotor, il y a six possibilités de combinaison des différents signaux délivrés par les détecteurs 190, et chaque changement de triplet constitué par les états des détecteurs 190 correspondant à une position angulaire déterminée du rotor. On peut ainsi connaître à des instants précis la position angulaire du rotor, et calculer par interpolation la position du rotor entre ces instants, connaissant sa vitesse. L'excitation des bobinages 340 peut ainsi s'effectuer de manière optimale, avec le déphasage souhaité. Le courant dans chaque bobine peut ainsi s'annuler en changeant de sens lorsqu'un aimant se trouve dans l'axe de la dent correspondante. A la différence d'un moteur à réluctance, qui ne travaille qu'en attraction, le moteur qui vient d'être décrit travaille sans réluctance en attraction et en répulsion, et permet de générer un couple important.

Chaque détecteur 190 comporte en outre un capteur de température.

La connaissance des températures des bobines 340 des différentes phases permet de détecter un éventuel dysfonctionnement du moteur.

Le rotor 200 comporte, sur l'une au moins des joues d'extrémité, des ailettes 291 de refroidissement, visibles sur la figure 1 notamment. On notera qu'une action de refroidissement supplémentaire est obtenue grâce à la présence de lobes 235 formés par les pièces polaires 230 à la périphérie du rotor, qui permettent de générer un courant d'air de refroidissement au coeur même du moteur.

L'invention n'est pas limitée à un moteur synchrone et s'applique également à la fabrication d'une génératrice. Le rotor peut être intérieur ou extérieur.

La puissance électrique de la machine peut être comprise par exemple entre 1 et 750 kW. La vitesse de rotation du rotor peut être comprise par exemple entre 1000 et 10000 trs/mn. Une machine conforme à l'invention peut trouver également des applications lorsque la vitesse est inférieure à 1000 trs/mn. Le diamètre extérieur de la machine peut être compris par exemple entre 50 mm et 1 m ; dans les applications les plus courantes, le diamètre extérieur pourra être compris entre 100 et 600 mm.

L'invention n'est pas limitée à un nombre de pôles particuliers ni à l'alimentation du stator avec du courant triphasé. Le courant peut être polyphasé à nₚₕₐₛₑₛ phases, n différent de trois.

Les dents du stator pourraient présenter une surface, dirigée vers le rotor, autre que cylindrique de révolution.

L'invention s'applique également à une machine à réluctance.

## Revendications

1. Machine électrique tournante comportant un stator, alimenté par un courant polyphasé, et ayant un circuit magnétique comprenant des dents (130) formant entre elles des encoches (140) pour recevoir des conducteurs électriques, le circuit magnétique comportant des secteurs (120) assemblés, définissant des entrefers (E) coupant les dents (130) à mi-largeur, **caractérisée en ce que**
les secteurs présentent chacun des reliefs (124a, 124b) aptes à coopérer avec des reliefs complémentaires de secteurs adjacents.

2. Machine selon la revendication 1, **caractérisée par le fait que** le circuit magnétique du stator est inséré à force dans un carter cylindrique (110) qui induit sur les secteurs des forces de compression radiales assurant leur cohésion.

3. Machine selon l'une quelconque des revendications 1 ou 2, **caractérisée par le fait que** le stator reçoit une bobine individuelle (340) sur chaque dent (130).

4. Machine selon la revendication précédente, **caractérisée par le fait que** chaque dent (130) présente une largeur non constante.

5. Machine selon la revendication précédente, **caractérisée par le fait que** chaque dent présente des côtés opposés (141a, 141b) qui divergent en éloignement du rotor, sur au moins une majeure partie de leur longueur à partir de l'extrémité libre de la dent.

6. Machine selon l'une quelconque des revendications précédentes, **caractérisée par le fait que** les dents sont dépourvues d'épanouissements polaires, et comportent à proximité de leur extrémité libre des encoches (144a, 144b) pour le montage de cales (160) de blocage de bobinés (340) engagées sur les dents (130).

7. Machine selon l'une quelconque des revendications précédentes, **caractérisée par le fait que** le rotor est à aimants permanents et à concentration de flux.

8. Machine selon l'une quelconque des revendications précédentes, **caractérisée par le fait que** chaque secteur (120) est formé par un paquet de tôles magnétiques superposées.

9. Machine selon l'une quelconque des revendications précédentes, **caractérisée par le fait que** les secteurs (120) forment, lorsque réunis, des trous (125) destinés à recevoir des vis de fixation (191) de détecteurs (190) disposés sur les dents (130).

10. Machine selon l'une quelconque des revendications précédentes, **caractérisée par le fait que** le courant est triphasé.

11. Machine selon l'une quelconque des revendications précédentes, **caractérisée par le fait que** le nombre de dents (130) n_{dents} vérifie la relation n_{dents} = paires * nₚₕₐₛₑₛ, où nₚₐᵢᵣₑₛ est le nombre de paires de pôles et nₚₕₐₛₑₛ le nombre de phases.

12. Machine selon l'une quelconque des revendications précédentes, **caractérisée par le fait que** la puissance électrique de la machine est comprise entre 1 et 750 kW.

13. Machine selon l'une quelconque des revendications précédentes, **caractérisée par le fait que** le diamètre extérieur de la machine est compris entre 100 et 600 mm.

## Claims

1. A rotary electric machine comprising a stator, powered by a polyphase current, having a magnetic circuit with teeth (130) forming intervening slots (140) for receiving electrical conductors, wherein said magnetic circuit comprises an assembly of sectors (120) defining air-gaps (E) intersecting said teeth (130) at half-width, **characterized in that** said sectors each have portions in relief (124a, 124b) that are capable of co-operating with complementary portions in relief of adjacent sectors.

2. A machine according to claim 1, wherein said magnetic circuit of said stator is inserted by force into a cylindrical case (110) which induces radial compression forces on said sectors in order to hold them together.

3. A machine according to claim 1 or claim 2, wherein said stator receives an individual coil (340) on each tooth (130).

4. A machine according to the preceding claim, wherein each tooth (130) is of non-constant width.

5. A machine according to the preceding claim, wherein each tooth has opposite sides (141a, 141b) which diverge going away from the rotor over at least a major portion of their length starting from the free ends of the tooth.

6. A machine according to any preceding claim, wherein said teeth do not have pole shoes, and comprise, in the vicinity of their free end, slots (144a, 144b) for mounting pieces (160) of locking shim for locking coils (340) engaged on the teeth (130).

7. A machine according to any preceding claim, wherein the rotor is a permanent magnet rotor and a flux-concentrating rotor.

8. A machine according to any preceding claim, wherein each sector (120) is formed by a stack of superposed magnetic laminations.

9. A machine according to any preceding claim, wherein, when joined together, said sectors (120) form holes (125) designed to receive firing screws (191) for fixing detectors (190) disposed on said teeth (130).

10. A machine according to any preceding claim, wherein said current is three-phase.

11. A machine according to any preceding claim, wherein the number of teeth (130) nₜₑₑₜₕ is in compliance with the relationship nₜₑₑₜₕ = nₚₐᵢᵣₑₛ * nₚₕₐₛₑₛ, where nₚₐᵢᵣₑₛ is the number of pairs of poles and npₚₕₐₛₑₛ the number of phases.

12. A machine according to any preceding claim, wherein the electric power of said machine lies in the range 1 to 750 kW.

13. A machine according to any preceding claim, wherein said machine has an outside diameter which lies in the range 100 to 600 mm.

## Patentansprüche

1. Rotierende elektrische Maschine mit einem Stator, der mit einem mehrphasigen Strom versorgt wird und eine Magnetschaltung aufweist, die Zähne (130) enthält, zwischen denen Nuten (140) zur Aufnahme von elektrischen Leitern gebildet sind, wobei die Magnetschaltung zusammengebaute Sektoren (120) enthält, die Spalte (E) definierem die die Zähne (130) in der Breite mittig schneiden,
**dadurch gekennzeichnet, dass** die Sektoren jeweils Reliefe (124a, 124b) aufweisen, die dazu ausgelegt sind, mit komplementären Reliefen der benachbarten Sektoren zusammen zu wirken.

2. Maschine nach Anspruch 1, **dadurch gekennzeichnet, dass** die Magnetschaltung des Stators mit Kraft in ein zylindrisches Gehäuse (110) eingeschoben ist, das auf die Sektoren eine radiale Kompressionskraft induziert, die deren Zusammenhalt sicherstellt.

3. Maschine nach Anspruch 1 oder 2, **dadurch gekennzeichnet, dass** der Stator eine einzelne Spule (340) auf jedem. Zahn (130) aufnimmt.

4. Maschine nach dem vorstehenden Anspruch, **dadurch gekennzeichnet, dass** jeder Zahn (13 0) eine nicht-konstante Breite aufweist.

5. Maschine nach dem vorstehenden Anspruch, **dadurch gekennzeichnet, dass** jeder Zahn gegenüberliegende Seiten (141a, 141b) aufweist, die in der Längsrichtung des Rotors über wenigstens einen größeren Teil von deren Breite ausgehend von dem freien Ende des Zahns auseinander laufen.

6. Maschine nach einem der vorstehenden Ansprüche, **dadurch gekennzeichnet, dass** die Zähne keine Polschuhe aufweisen und in der Nähe ihrer freien Enden Nuten (144a, 144b) für die Befestigung von Blockierelementen (160) der auf den Zähnen (130) angebrachten Spulen (340) haben.

7. Maschine nach einem der vorstehenden Ansprüche, **dadurch gekennzeichnet, dass** der Rotor ein Rotor mit Permanentmagneten und Flusskonzentration ist.

8. Maschine nach einem der vorstehenden Ansprüche, **dadurch gekennzeichnet, dass** jeder Sektor (120) mit einem überlagerten magnetischen Blechpaket ausgebildet ist.

9. Maschine nach einem der vorstehenden Ansprüche, **dadurch gekennzeichnet, dass** die Sektoren (120) bei Vereinigung Bohrungen (125) bilden, die dazu ausgelegt sind, Befestigungsschrauben (191) von Detektoren (190) aufzunehmen, die auf den Zähnen (130) angeordnet sind.

10. Maschine nach einem der vorstehenden Ansprüche, **dadurch gekennzeichnet, dass** der Strom dreiphasig ist.

11. Maschine nach einem der vorstehenden Ansprüche, **dadurch gekennzeichnet, dass** die Anzahl der Zähne (130) n_{dents} die Relation n_{dents} nₚₐᵢᵣₑₛ * nₚₕₐₛₑₛ erfüllt, wobei nₚₐᵢᵣₑₛ die Auzahl der Polpaare und nₚₕₐₛₑₛ die Anzahl der Phasen ist.

12. Maschine nach einem der vorstehenden Ansprüche, **dadurch gekennzeichnet, dass** die elektrische Leistung der Maschine zwischen 1 und 750 kW beträgt.

13. Maschine nach einem der vorstehenden Ansprüche, **dadurch gekennzeichnet, dass** der Außendurchmesser der Maschine zwischen 100 und 600 mm beträgt.
